# EUROPÄISCHE PATENTANMELDUNG

(11) **EP 4 105 810 A1**
(43) Veröffentlichungstag der Anmeldung: **21.12.2022**
(21) Anmeldenummer: 21179824.4
(22) Anmeldetag: 16.06.2021
(51) Int. Cl.: G06F 30/18, G06F 113/04

(54) **VERFAHREN ZUR MODELLIERUNG EINER NETZTOPOLOGIE EINES NIEDERSPANNUNGSNETZES**

(71) Anmelder: Siemens Aktiengesellschaft, 80333 München (DE)
(72) Erfinder: Kainz, Juliana, 1070 Wien (AT); Einfalt, Alfred, 1210 Wien (AT); Sabou, Marta, 1140 Wien (AT); Kintzler, Florian, 1140 Wien (AT); Schildorfer, Andreas, 3430 Tulln an der Donau (AT)
(74) Vertreter: Maier, Daniel Oliver

(57) **Zusammenfassung**

Computerimplementiertes Verfahren zur Modellierung einer Netztopologie eines Teilbereichs eines Niederspannungsnetzes, welches Komponenten und Anschlusspunkte umfasst, an welche die Komponenten angebunden sind. Die Netztopologie des Niederspannungsnetzes kann dynamisch verändert werden durch Einschalten, Umschalten und Abschalten von Leitungen, und durch Hinzufügen oder Entfernen von Betriebsmitteln, Verbrauchern und Energieerzeuger- oder Energiespeichereinheiten. Die Netztopologie wird als Graph mit Knoten und Kanten modelliert (101), wobei die Komponenten Kanten und die Anschlusspunkte der Komponenten Knoten sind. Für alle Kanten werden zu einem Initialisierungszeitpunkt geltende Zustände ermittelt und den Kanten als erste Zustandsinstanz zugeordnet (102). Bei nachfolgenden Änderungen der Netztopologie werden für die Kanten die jeweils aktuellen Zustände ermittelt (103), welche ab einem Zeitpunkt der Änderung der Netztopologie gelten. Jeder Kante wird der ab dem Zeitpunkt der Änderung der Netztopologie aktuell gültige Zustand als weitere Zustandsinstanz gemeinsam mit einem Zeitstempel zugeordnet (104), der den Zeitpunkt der Änderung angibt.

## Beschreibung

### Technisches Gebiet

Die vorliegende Erfindung betrifft ein computerimplementiertes Verfahren zur Modellierung einer Netztopologie zumindest eines Teilbereichs eines Niederspannungsnetzes, welches Komponenten und Anschlusspunkte umfasst, an welche die Komponenten angebunden sind. Dabei wird die Netztopologie des zumindest einen Teilbereichs des Niederspannungsnetzes durch Einschalten, Umschalten und/oder Abschalten von Komponenten, insbesondere Leitungen, und/oder durch Hinzufügen oder Entfernen von Komponenten, insbesondere Betriebsmittel, Verbraucher und/oder Energieerzeuger- oder Energiespeichereinheiten, dynamisch verändert.

### Stand der Technik

Durch eine zunehmende Durchdringung mit dezentralen, meist erneuerbaren Energieerzeugungsanlagen (z.B. Photovoltaikanlagen, Windkraftanlagen, etc.) ist der klassische Betrieb von Energieversorgungsnetzen vor große Herausforderungen gestellt. Zusätzlich führen die Entwicklung der Elektromobilität und damit eine verstärkte Substitution von anderen Energieübertragungsformen durch Elektrizität zu weiteren Herausforderungen. Weiterhin wird eine Bildung so genannte Energy Communities als wesentlicher Baustein der Energiewende gesehen und dieser durch zeitnahe Umsetzung entsprechender Richtlinien der Europäischen Union (z.B. Erneuerbare Energie Richtlinie, Strombinnenmarktrichtlinie), welche auch als "Winterpaket" bezeichnet werden, in die jeweiligen nationalen Gesetzesvorlagen einen zusätzlichen Schub verleihen. Häufig werden so genannte Smart Grids oder Intelligente Stromnetze als Lösung für Problemstellungen in Verbindung mit dezentraler Einspeisung von z.B. Wind- und/oder Sonnenenergie, etc. gesehen, wobei die Netzstabilität durch die dezentrale Einspeisung insbesondere in ein Niederspannungsnetz häufig gefährdet ist.

Niederspannungsnetze sind ein Teil des Energieversorgungsnetzes zur Verteilung elektrischer Energie an einen größten Teil der Endverbraucher (z.B. Haushalte). Bei dezentraler Energieerzeugung kann auch von Energieerzeugern (z.B. Photovoltaikanlagen, Brennstoffzellen, Kleinwindkraftanlagen, etc.) und/oder von flexiblen Verbraucher bzw. Energiespeichereinheiten (z.B. Batterien, Wärmepumpen, Ladestationen für z.B. E-Mobilität, etc.) lokal elektrische Energie in ein Niederspannungsnetz eingespeist werden. Neben Verbrauchern, lokalen Energieerzeugern und/oder Energiespeichereinheiten weist ein Niederspannungsnetz noch Netzbetriebsmittel, wie z.B. Transformatoren, Leitungen, etc. als Komponenten auf.

Um Spannungsverluste zu vermeiden, sind Niederspannungsnetze in der räumlichen Ausdehnung auf einen Bereich von einigen 100 m bis zu einigen wenigen Kilometern beschränkt und werden daher regional über Transformatorstationen, welche auch als Umspannstation, Netzstation oder Ortnetzstation bezeichnet werden, aus einem übergeordneten Mittelspannungsnetz gespeist. Dazu ist beispielsweise ein mittelspannungsseitiger Ausgang eines Transformators der Transformatorstation über einen entsprechenden Anschlusspunkt mit einer Einspeiseeinheit im Mittelspannungsnetz verbunden.

Topologisch sind Niederspannungsnetze üblicherweise ausgehend vom Bereich der Einspeisung aus dem übergeordneten Mittelspannungsnetz und einer Hauptverteilung (z.B. Transformatorstation) in mehrere Leitungsstränge bzw. Abzweige unterteilt, welche über eine gemeinsame Sammelschiene mit einem niederspannungsseitigen Ausgang des Transformators der Transformatorstation verbunden sind. Bei der Sammelschiene als Anschluss- oder Knotenpunkt bzw. zentraler Verteiler der elektrischen Energie laufen üblicherweise alle angeschlossenen, ankommenden und abgehenden Leitungsstränge des Niederspannungsnetzes zusammen, welche z.B. über eine Schaltanlage bzw. zugehörige Trenn- und/oder Leistungsschalter ein-, ab- oder umgeschaltet werden können. An die Leitungsstränge bzw. Abzweige sind üblicherweise die einzelnen Verbraucher bzw. Verbrauchergruppen als Lasten und/oder gegebenenfalls dezentrale Energieerzeuger (z.B. Photovoltaikanlagen, Brennstoffzellen, Windkraftanlagen, Energiespeichereinheiten, etc.) über entsprechende Anschluss- oder Knotenpunkte, wie z.B. so genannte Schleifenkästen für weitere Abzweigungen im Netz und/oder so genannte Trennanschlusskästen an z.B. Grundstücksgrenzen, angebunden, wobei an den Anschlusspunkten üblicherweise zumindest zwei Leitungen zusammentreffen.

Betreiber von Energieversorgungsnetzen, wie z.B. Niederspannungsnetzen, haben üblicherweise einen gegebenenfalls gesetzlich vorgegebenen Versorgungsauftrag zu erfüllen und beispielsweise einen normgerechten Netzbetrieb - wie z.B. eine Einhalten von Spannungsgrenzen gemäß der Norm EN50160 (z.B. Spannungsgrenzen von +/- 10% der Nennspannung) - sicherzustellen. Durch zusätzliche Teilnehmer werden die Systeme allerdings näher an den Grenzen Betrieben, wodurch beispielsweise von einer eher passiven, auf Planungsreserven basierenden Betriebsführung auf eine mehr aktive Betriebsführung übergegangen werden muss, welche auf aktuellen Messwerte (z.B. Strom- und/oder Spannungsmesswerte) aus den Energieversorgungsnetz, insbesondere Niederspannungsnetz, basiert.

Die Systemgrenzen und damit die Netzstabilität können, je nach Versorgungsgebiet, vorwiegend in zwei Bereichen gefährdet sein. In Versorgungsnetzen bzw. Niederspannungsnetzen im ländlichen Raum ist das vorherrschende Problem die Spannungserhaltung bzw. das so genannte U-Problem. Bei Versorgungsnetzen bzw. Niederspannungsnetz im urbanen Bereich, welche aufgrund der Lastdichte eher geringe Leitungslängen aufweisen, ist weniger der Spannungserhalt, sondern vielmehr eine Auslastung der Betriebsmittel das vorherrschende Problem, welches auch als I-Problem bezeichnet wird. Durch die dezentrale Einspeisung von Energie mittels z.B. alternativer Energieerzeugung (z.B. Photovoltaik, Windkraft, Energiespeichereinheiten, etc.) kann zunächst eine hohe Auslastung von Betriebsmitteln wie z.B. Leitungen und Transformatoren verringert werden. In sehr seltenen Fällen werden bei der Rückspeisung Leistungsgrenzen verletzt. Natürlich können z.B. in suburbanen Gebieten auch Netzabschnitte innerhalb eines Netzgebietes sowohl eher den beschriebenen ländlichen als auch den städtischen Charakter haben. Um einen normgerechten Netzbetrieb, wie z.B. gemäß der Norm EN50160 auch bei einem vom Versorgungsanschluss des Niederspannungsnetzes weit entfernten Teilnehmer aufrechtzuerhalten bzw. um eine Überlastung der Betriebsmittel zu verhindern, kann beispielsweise entweder Netzausbau betrieben werden oder aktives Netzmanagement mittels eines entsprechenden Systems eingesetzt werden.

Ein derartiges aktives Netzmanagementsystem greift z.B. gezielt auf Erzeuger, flexible Verbraucher oder auch Energiespeichereinheiten im Netz zu und steuert diese beispielsweise mit einem so genannten Demand-Response Verfahren derart, dass der Netzbetrieb normgerecht aufrechterhalten werden kann. Eine Basis für eine stabilen Betrieb eines Niederspannungsnetzes mittels eines aktiven Netzmanagementsystems sind valide Messdaten (z.B. Spannungs- und/oder Stromwerte, Wirkleistungswerte, Blindleistungswerte, etc.) aus dem betroffenen Netz.

Derzeit erfolgt eine Messung der Messdaten beispielsweise durch im Niederspannungsnetz installierte Messeinheiten, wobei für die Messungen beispielsweise Messeinheiten bei Anschlusspunkten (z.B. Sammelschienen, Schleifenkasten, etc.) und/oder beim Anschlusspunkt des jeweiligen Niederspannungsnetzes (z.B. in Transformatorstationen bzw. Ortsnetzstationen) installierte Messsensoren und bei Endverbrauchern angebrachte, so genannte Intelligente Zähler oder Smart Meter verwendet werden. Dabei erfolgt z.B. nach Installation eines Intelligenten Zählers bzw. eines Messsensors in einem Niederspannungsnetz eine so genannte knotenscharfe Zuordnung bzw. Zuordnung zu einem Anschluss- oder Knotenpunkt (z.B. Transformatorstation, Sammelschiene, Schleifenkasten, etc.) im Netz.

Bei Smart Metern erfolgt die knotenscharfe Zuordnung beispielsweise über eine Verknüpfung von Kundennummern, Zählplatznummern bzw. Seriennummern in entsprechenden Verarbeitungssystem eines Messstellenbetreibers. Ist dieser ident mit dem Verteilnetzbetreiber, so steht diese Zuordnung dann beispielsweise Middleware-Einheiten (z.B. Aggregatoren, dezentralen Netzreglern in Transformatorstationen) zur Verfügung und ermöglicht es z.B. Netzmanagementsystemen eingehende Messdaten von Intelligenten Zählern hinsichtlich ihrer Position im Netz zu klassifizieren und weiterzuverarbeiten. Sind allerdings Messstellenbetreiber und Netzbetreiber nicht ident, so besteht eine gewisse Hürde, beispielsweise Informationen über die Positionen der Smart Meter im Netz verfügbar zu machen.

Bei im Niederspannungsnetz installierten Messeinheiten, welche beispielsweise bei Anschluss- oder Knotenpunkten, wie z.B. Transformatorstation, Sammelschiene, Schleifenkasten, etc. angebracht sein können, aber derzeit noch kaum verbaut werden, können beispielsweise für die knotenscharfe Zuordnung zu den jeweiligen Anschlusspunkten entsprechende Daten aus einem geografischen Informationssystem genutzt werden. Da diese meist manuell in entsprechenden Systemen nachgepflegt werden müssen, kann es beispielsweise bei Umschaltungen, etc. zu einer Verzögerung hinsichtlich einer Korrektur der jeweils aktuell gültigen Netztopologie kommen. Systeme, wie z.B. Netzmanagementsystem, welche für eine korrekte Interpretation der Messdaten auf zum jeweiligen Messzeitpunkt gültige Topologieinformationen angewiesen sind, greifen dann gegebenenfalls auf ein nicht mehr gültiges Netzmodell bzw. eine zum Messzeitpunkt veraltete Netztopologie des Niederspannungsnetzes zu. Dies kann in der Folge zu einer Fehl- oder Missinterpretation von jeweiligen Messdaten führen. Weiterhin ist eine händische Erfassung der Topologie oder eine händische Aktualisierung gegebenenfalls vorhandener Pläne aufgrund der hohen Komplexität der Niederspannungsnetze wenig zielführend.

Insbesondere um verlustoptimierte Lösungen für das U-Problem zu ermöglichen bzw. speziell für das I-Problem ist auch eine zumindest näherungsweise Kenntnis der jeweils gültigen Netztopologie des jeweiligen Niederspannungsnetzes bzw. des jeweiligen Teilbereichs des Niederspannungsnetzes unerlässlich. Um im Niederspannungsnetz von Messeinheiten, Messsensoren und Smart Metern gesammelte Messdaten richtig interpretierten zu können, ist es daher notwendig, dass für Netzmanagementsysteme jene Netztopologie verfügbar ist, welche zum Zeitpunkt der jeweiligen Erfassung der Messdaten gültig und aktuell war bzw. in welcher dynamische Veränderungen der Netztopologie z.B. durch Schaltzustandsänderungen (z.B. Ein/Aus) in Schaltanlagen, etc. berücksichtigt sind.

### Darstellung der Erfindung

Der Erfindung liegt daher die Aufgabe zugrunde, ein Verfahren zur Modellierung einer Netztopologie für zumindest eine Teilbereich eines Niederspannungsnetzes anzugeben, mit welchem auf einfache Weise für einen beliebig vorgebbaren Abfragezeitpunkt eine jeweils gültige Netztopologie des zumindest einen Teilbereichs des Niederspannungsnetzes ermittelt und ausgegeben werden kann.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein computerimplementiertes Verfahren der eingangs erwähnten Art, bei welchem zuerst eine Netztopologie zumindest eines Teilbereichs eines Niederspannungsnetzes mit Komponenten (z.B. Verbraucher, Energieeinspeiser, Energieerzeuger, Energiespeichereinheiten und Betriebsmittel, wie z.B. Transformatoren, Leitungen, etc.), welche über Anschlusspunkte (z.B. Sammelschienen, Schleifenkästen, Trennanschlusskästen, etc.) an das Niederspannungsnetz angebunden sind, als Graph bzw. Graphen-Modell mit Knoten und Kanten modelliert wird. Dabei werden die Komponenten des Niederspannungsnetzes als Kanten bzw. als Kanten mit einem zugehörigen Anfangs- oder Endknoten dargestellt. Die Anschlusspunkte bzw. Knotenpunkte - d.h. Sammelschienen, Schleifenkästen, Trennanschlusskästen, an welchen zumindest zwei oder mehrere Leitungen für eine Anbindung oder Verbindung von Komponenten zusammentreffen, werden als Knoten dargestellt. Für einen Initialisierungszeitpunkt wird für jede Kante des Graphen-Modells ein zu einem Initialisierungszeitpunkt geltender Zustand ermittelt und dann der jeweiligen Kante als erste Zustandsinstanz oder Initialinstanz zugeordnet, wobei diese erste Zustandsinstanz für den Initialisierungszeitpunkt gilt. Weiterhin wird bei jeder Änderung der Netztopologie für jede Kante des Graphen ein jeweils aktueller Zustand ermittelt, welcher ab einem Zeitpunkt der jeweiligen Änderung der Netztopologie für die jeweilige Kante des Graphen gilt. Dann wird jeder Kante des Graphen der jeweils ermittelte und ab dem Zeitpunkt der jeweiligen Änderung der Netztopologie aktuell gültige Zustand als jeweils weitere Zustandsinstanz gemeinsam mit einem Zeitstempel zugeordnet. Dabei gibt der Zeitstempel der jeweiligen weiteren Zustandsinstanz den Zeitpunkt der Änderung an.

Der Hauptaspekt der gegenständlichen Erfindung besteht darin, dass es durch eine Ermittlung der jeweiligen Zustände der Kanten im Graphen, welche durch Topologieänderungen verändert werden können, und durch eine Zuordnung der jeweils aktuell geltenden Zustände als Zustandsinstanzen mit Zeitstempel zu den entsprechenden Kanten möglich ist, dynamische und zeitlicher Veränderungen der Netztopologie in das Modell der Netztopologie des Niederspannungsnetzes einzubinden. Vorteilhaft ist daran auch, dass die im Niederspannungsnetz grundsätzlich vorhandene Infrastruktur durch die Modellierung gemäß der Erfindung im Modell noch verfügbar ist, auch wenn gewisse Komponenten des Netzes zu einem bestimmten Zeitpunkt deaktiviert oder ausgeschaltet sind. Systeme z.B. zur Netzüberwachung, welche auf die Modellierung der Netztopologie bzw. auf das erfindungsgemäß generierte Graphen-Modell zugreifen, haben damit auf einfache Weise eine Information über eine Netztopologie des Niederspannungsnetzes zur Verfügung, in welcher beispielsweise dynamische Veränderungen der Netztopologie, wie z.B. Ein-, Um- oder Abschaltungen von z.B. Leitungen, Schaltungen in Schaltanlagen, etc., berücksichtigt sind. Aus dieser Information ist beispielsweise auch eine zu einem vorgebbaren Zeitpunkt gültige Netztopologie des Niederspannungsnetzes bzw. eines Teilbereichs davon ableitbar. Dynamische Veränderungen in der Netztopologie können damit im Nachhinein sehr einfach verfolgt werden. Dadurch können Fehlinterpretationen von Messdaten sehr einfach vermieden werden, da durch die erfindungsgemäße Modellierung der Netztopologie dieses mit Messdaten aus dem Netz, wie z.B. aufgezeichneten Zeitreihen von Strom-, Spannungs- und/oder Leistungsmesswerten, auf einfache Weise konsistent gehalten werden kann.

Es ist vorteilhaft, wenn bei einer jeweiligen Änderung der Netztopologie eine Zuordnung von jeweils weiteren Zustandsinstanzen mit zugehörigem Zeitstempel auf jenen Kanten des Graphen reduziert wird, deren jeweiliger aktueller Zustand durch die jeweilige Änderung der Netztopologie geändert wurde. D.h., es wird bei einer Topologie-Änderung im Netz nur jenen Kanten ein neue bzw. weitere Zustandsinstanz zugeordnet, bei welchen sich der für die Topologie-Änderung ermittelte, aktuell gültige Zustand auch geändert hat. Kanten, deren Zustand beispielsweise unverändert bleibt, erhalten damit keine, weitere Zustandsinstanz. Dadurch wird eine Anzahl der im Graphen vorhandenen Zustandsinstanzen auf einfache Weise auf längere Sicht deutlich reduziert.

Es ist auch vorteilhaft, wenn die jeweilige Änderung der Netztopologie des zumindest einen Teilbereichs des Niederspannungsnetzes im Graphen bzw. im Graphen-Modell zu einem Ereignis, welches auch als Event bezeichnet wird, zusammengefasst wird bzw. als Ereignis oder Event abgebildet wird. Von einem Ereignis oder Event werden dabei idealerweise alle zum Zeitpunkt der jeweiligen Änderung der Netztopologie auftretenden Zustandsänderungen der Kanten zusammengefasst. Das Event umfasst dabei die Gesamtheit aller Zustandsinstanzen der Kanten im Graphen, welche zu einem bestimmten Zeitpunkt und damit einer bestimmten Änderung der Netztopologie durch ihren Zeitstempel zugeschrieben werden. Ein Event ist damit eindeutig durch den jeweiligen Zeitstempel gekennzeichnet, den die Zustandsinstanzen der jeweiligen Kanten aufweisen, und gibt damit auf einfache Weise eindeutig an, welche Veränderung in der Netztopologie an einem bestimmten Zeitpunkt in der Topologie des Niederspannungsnetzes stattgefunden haben.

Es ist weiterhin günstig, wenn anhand der Zeitstempel der jeweiligen Zustandsinstanzen, welche den jeweiligen Kanten im Graphen zugeordnet sind, eine für einen vorgebaren Zeitpunkt gültige Netztopologie des zumindest einen Teilbereichs des Niederspannungsnetzes abgeleitet wird. Aus dem Graphen-Modell kann damit auf sehr einfache Weise eine gültige Netztopologie für einen vorgegebenen Zeitpunkt oder gerade aktuelle, gültige Netztopologie extrahiert werden. Dazu werden z.B. die Zustandsinstanzen oder das entsprechende Event abgefragt, welche bzw. welches einen für den vorgegebenen Zeitpunkt gültigen bzw. relevanten Zeitstempel aufweisen. Ein relevanter Zeitstempel ist dabei ein Zeitstempel, der einen Zeitpunkt angibt, welcher mit dem vorgegebenen Zeitpunkt entweder zusammenfällt oder in einer Zeitreihe am kürzesten vor dem vorgegebenen Zeitpunkt liegt - d.h. der Zeitstempel liegt in der Zeitreihe am kürzesten in der Vergangenheit vor dem vorgegebenen Zeitpunkt. Um beispielsweise aus dem Graphen-Modell eine zuletzt gültige Netztopologie zumindest eines Teilbereichs eines Niederspannungsnetze abzuleiten, können z.B. die Zustandsinstanzen der Kanten mit dem jüngsten, neuesten bzw. aktuellsten Zeitstempeln bzw. das Ereignis bzw. Event mit dem jüngsten, neuesten bzw. aktuellsten Zeitstempel abgefragt werden.

Alternativ oder zusätzlich, kann aus dem Graphen-Modell idealerweise anhand der Zeitstempel der jeweiligen Zustandsinstanzen, welche den jeweiligen Kanten im Graphen zugeordnet sind, eine Liste von Änderungen der Netztopologie des zumindest einen Teilbereichs des Niederspannungsnetzes für einen vorgebbaren Zeitraum abgeleitet werden. Dazu können beispielsweise alle Zustandsinstanzen der Kanten bzw. die entsprechenden Events abgefragt werden, deren Zeitstempel in den vorgegebenen Zeitraum fallen. Auf diese Weise können beispielsweise Veränderungen der Netztopologie über einen vorgebbaren Zeitraum ermittelt, ausgegeben und gegebenenfalls in Kombination mit in diesem Zeitraum erfassten Messdaten analysiert werden. Auswirkungen von Schaltzuständen im Niederspannungsnetz können z.B. nachträglich einfacher verfolgt und z.B. von Systemen zur Netzüberwachungen ausgewertet werden.

Zweckmäßigerweise wird einer Kante als jeweilige Zustandsinstanz ein aktiver Zustand oder ein deaktivierter Zustand zugeordnet. Das bedeutet, die jeweilige Zustandsinstanz gibt an, ob die jeweilige, zugehörige Kante bzw. die als Kante dargestellte Komponente des Teilbereichs des Niederspannungsnetzes zum im Zeitstempel der jeweiligen Zustandsinstanz aktiv oder deaktiviert war. So kann die jeweilige Zustandsinstanz z.B. angeben, ob beispielsweise eine Leitung zwischen zwei Anschlusspunkten bzw. Knotenpunkten zu einem bestimmten Zeitpunkt aktiv war (d.h. Energie übertragen hat) oder z.B. aufgrund einer Störung oder Schaltung im Netz unterbrochen war. Die Zustandsinstanz kann beispielsweise auch angeben, ob z.B. ein Energieerzeuger oder ein Energiespeichereinheit zum im Zeitstempel angegebenen Zeitpunkt an das Niederspannungsnetz angeschaltet (= aktiv) oder weggeschaltet (=deaktiviert) war.

Idealerweise werden bei einer Darstellung der Komponenten als Kanten und/oder als Kanten mit zugehörigem Anfangs- oder Endknoten Anschlüsse der jeweiligen Kanten an die Knoten und Zustandsänderungen der Anschlüsse der jeweiligen Kanten im Graphen betrachtet. Weiterhin wird bei der Darstellung der Komponenten als Kanten und/oder als Kanten mit zugehörigem Anfangs- oder Endknoten im Graphen eine Richtung eines Energieflusses zwischen den Komponenten und den zugehörigen Anschlusspunkten im zumindest einen Teilbereich des Niederspannungsnetzes berücksichtigt. Dazu werden im Graphen bzw. Graphen-Modell anstatt der Kanten die Anschlüsse der Kanten an die jeweiligen Knoten - so genannte Terminals - mit Zustandsinstanzen versehen, welche einen Zustand für einen Zeitpunkt einer jeweiligen Topologie-Änderung beinhalten, sofern von der jeweiligen Topologie-Änderung der jeweils aktuell gültige Zustand des jeweiligen Terminals bzw. Kanten-Anschlusses verändert wurde. Ein Terminal stellt dabei einen Anschluss der jeweiligen Kante bzw. der durch die jeweilige Kante modellierten Komponente (z.B. Verbraucher, Energieeinspeiser, Energieerzeuger oder Betriebsmittel) an einem Knoten bzw. Anschlusspunkt im Netz dar. Terminals sind z.B. Enden von Leitungen bzw. Kabeln, Anschlüsse eines Transformators, ein Anschluss eines Verbrauchers bzw. Haushalts, etc. Diesen Terminals werden dann mittels der jeweiligen Zustandsinstanzen die jeweils durch Topologie-Änderungen auftretenden geänderten Zustände (z.B. Terminal "aktiv", Terminal "deaktiviert") zugeordnet. Diejenigen Terminals, welche ihren Zustand z.B. nie ändern, bekommen beispielsweise keine Zustandsinstanz zugewiesen, wodurch eine Anzahl der Zustandsinstanzen idealerweise so gering wie die Änderungsereignisse gehalten werden kann. Da die Strommessung im Niederspannungsnetz üblicherweise bei den Leitungen bzw. Kabeln - häufig in Nähe von Anschlüssen bzw. Anschlusspunkten erfolgt, wird durch eine Abbildung der Anschlüsse als Terminals und durch die Zuordnung der Zustandsinstanzen beispielsweise der Energiefluss auf der Leitung (z.B. vom Anschlusspunkt zum Verbraucher, vom Energieeinspeiser oder Energieerzeuger zum Anschlusspunkt, etc.) sehr einfach berücksichtigt. Messdaten, insbesondere Strommesswerte können damit besser und einfacher interpretiert werden. Bedien- und Wartungspersonal kann dadurch gegebenenfalls auftretende Fehler und Störungen im Niederspannungsnetz einfacher und rascher lokalisieren.

Es ist von Vorteil, wenn der Graph des zumindest einen Teilbereichs des Niederspannungsnetzes auf Basis von Netzplanungsdaten oder vorliegenden Netzmanagementdaten modelliert wird. Dadurch können beispielsweise bei einem Netzbetreiber bereits vorliegende Netzdaten oder Netzmodelle als Ausgangspunkt für die Modellierung ohne großen Zeitaufwand genutzt werden. So können z.B. Netzplanungsdaten der Simulationssoftware PSS^{®}Sincal, welche beispielsweise für Planung, Auslegung und Betriebsführung von elektrischen Übertragungs-, Verteil und Industrienetzen sowie für andere Arten von mit Wechselstrom betriebenen Netzen (z.B. Micro-Grids, etc.) eingesetzt wird, als Ausgangsdaten für die Modellierung verwendet werden.

Ein Speicherung und gegebenenfalls Verarbeitung des Graphen bzw. des Graphen-Modells des zumindest einen Teilbereichs des Niederspannungsnetzes erfolgt idealerweise in einer Graph-Datenbank. Die Nutzung einer Graph-Datenbank, wie z.B. der Open-Source Graph-Datenbank Neo4j, zur Darstellung der Netztopologie einen Niederspannungsnetzes bietet den Vorteil, dass derartige Datenbanken durch ihre Struktur bereits für eine Darstellung topologischer Beziehungen optimiert sind und für eine Bearbeitung und Weiterverarbeitung der Daten beispielsweise spezielle Abfragesprachen (z.B. SPARQL, Cypher, GraphQL) bieten. Dadurch können Abfragen, wie z.B. eine zu einem bestimmten, vorgegebenen Zeitpunkt aktuelle Netztopologie rasch und zeiteffizient durchgeführt werden.

### Kurzbeschreibung der Zeichnung

Die Erfindung wird nachfolgend in beispielhafter Weise anhand der beigefügten Figuren erläutert. Dabei zeigen:
- Figur 1: schematisch einen beispielhaften Ablauf des erfindungsgemäßen Verfahrens zur Modellierung zumindest eines Teilbereichs eines Niederspannungsnetzes
- Figur 2: schematisch und beispielhaft ein gemäß einem Modellierungsschritt des erfindungsgemäßen Verfahrens erstelltes Graphen-Modell eines beispielhaften Niederspannungsnetzes
- Figuren 3a bis 3c: schematisch und beispielhaft eine erfindungsgemäße Modellierung eines Teilbereichs des beispielhaft in Figur 2 dargestellten Niederspannungsnetzes
- Figur 4: schematisch und beispielhaft eine Variante der erfindungsgemäßen Modellierung des Teilbereichs des beispielhaft in Figur 2 dargestellten Niederspannungsnetzes
- Figur 5: schematisch und beispielhaft eine weitere Variante der erfindungsgemäßen Modellierung zumindest eines Teilbereichs eines beispielhaften Niederspannungsnetzes

### Ausführung der Erfindung

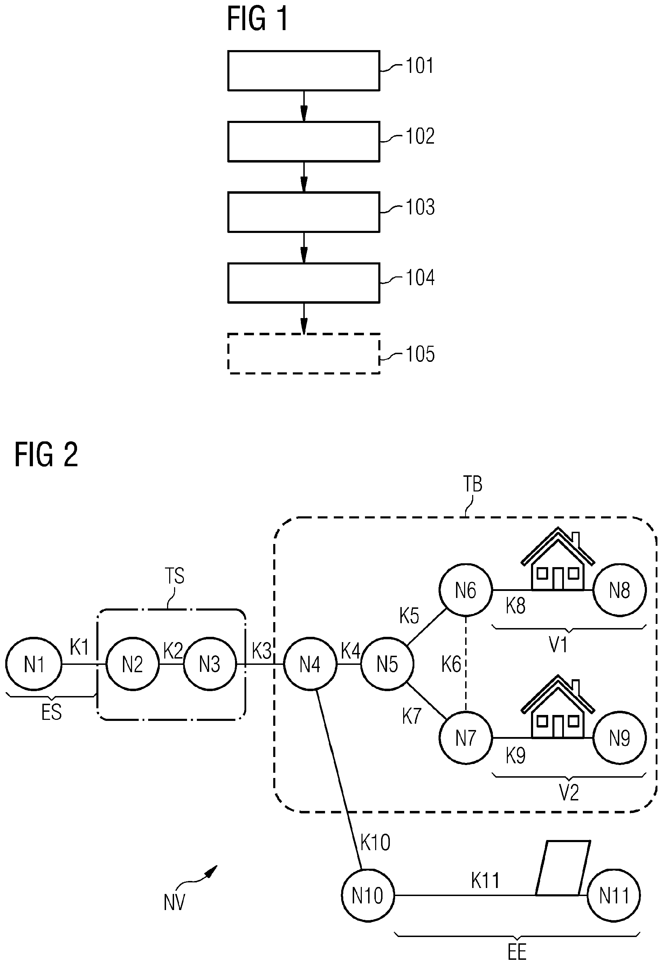

Figur 1 zeigt in schematischer Weise einen beispielhaften Ablauf des erfindungsgemäßen Verfahrens zur Modellierung zumindest eines Teilbereichs eines Niederspannungsnetzes. Dazu wird in einem Modellierungsschritt 101 eine (statische) Netztopologie zumindest eines Teilbereichs eines Niederspannungsnetzes, welcher z.B. überwacht bzw. in welchem z.B. Änderungen analysiert und gemeinsam mit Messdaten aus dem Niederspannungsnetz (z.B. Strom-, Spannungs- und/oder Leistungsmessdaten) ausgewertet werden sollen, als Graph mit Knoten und Kanten modelliert. Für eine Darstellung der (statischen) Netztopologie - d.h. des Niederspannungsnetz-Teilbereichs bzw. des Niederspannungsnetzes mit seinen Komponenten (z.B. Verbraucher, Energieeinspeiser, Energieerzeuger, Energiespeichereinheiten und Betriebsmittel, wie z.B. Transformatoren, Leitungen, etc.) und Anschlusspunkten (z.B. Sammelschienen, Schleifenkästen, Trennanschlusskästen, etc.) - als Graph bzw.

Graph-Modell mit Kanten und Knoten werden beispielsweise Netzplanungsdaten aus einer entsprechenden Datenbank und/oder einem entsprechenden Netzsimulations- bzw. Netzplanungstool, wie z.B. PSS^{®}Sincal herangezogen.

Im Graphen bzw. Graphen-Modell, welches im Modellierungsschritt 101 erstellt wird, werden Komponenten des Niederspannungsnetzes als Kanten bzw. als Kanten mit zugehörigem Anfangs- oder Endpunkt und Anschlusspunkte der Komponenten im Niederspannungsnetz als Knoten dargestellt. Als Kanten werden z.B. Betriebsmittel des Niederspannungsnetzes, wie z.B. Transformatoren in Transformatorstationen, Leitungen, Kabel, etc. dargestellt. Komponenten, wie z.B. Verbraucher (z.B. einzelne oder mehrere Haushalte, Gebäude, etc.), an das Netz angeschlossene Energieerzeuger (z.B. PV-Anlage, Kleinwindkraftanlage, etc.), Energieeinspeiser aus einem übergeordneten Netz, etc., welche z.B. eine Grenze bzw. einen Endpunkt des Niederspannungsnetzes bilden, werden beispielsweise als Kante mit zugehörigem Anfangs- oder Endpunkt dargestellt. Eine fertige Modellierung der (statischen) Netztopologie des zumindest einen Teilbereich des Niederspannungsnetzes als Graph kann dann z.B. in einer Graph-Datenbank, wie z.B. Neo4j, etc., gespeichert und in der Folge weiterverarbeitet werden.

In einem Initialisierungsschritt 102 wird zuerst für jede Kante des Graphen ein zu einem Initialisierungszeitpunkt geltender Zustand der Kante bzw. der durch die Kante dargestellten Komponente ermittelt. Eine Kante kann dabei z.B. einen aktiven Zustand oder einen deaktivierten Zustand aufweisen. Der zum Initialisierungszeitpunkt ermittelte Zustand der jeweiligen Kante wird dann der jeweiligen Kante als erste Zustandsinstanz oder Initialisierungsinstanz zugeordnet. Diese erste Zustandsinstanz der Graph-Kanten kann z.B. mit einem Zeitstempel versehen werden, in welchem der Initialisierungszeitpunkt hinterlegt wird. Weiterhin können die Initialisierungsinstanzen aller Graph-Kanten zu einem ersten Ereignis oder Event - dem so genannten Initialisierungsevent - zusammengefasst werden. Dieses Initialisierungsevent stellt eine Ausgangsnetztopologie des zumindest einen Teilbereichs des Niederspannungsnetzes dar.

In der Folge wird in einem Ermittlungsschritt 103 bei einer Änderung in der Netztopologie des zumindest einen Teilbereichs des Niederspannungsnetzes für jede Kante des Graphen ein jeweils aktueller Zustand ermittelt, welcher ab einem Zeitpunkt der Änderung der Netztopologie für die jeweilige Kante des Graphen gültig ist. Änderungen in der Netztopologie liegen dann vor, wenn z.B. eine oder mehrere Kanten ihren jeweils aktuellen Zustand verändern. D.h. z.B. durch eine Schaltung im Netz wird eine Leitung ein- oder ausgeschaltet oder es tritt z.B. bei einer Leitung ein Störfall bzw. eine Unterbrechung auf, wodurch eine andere, deaktivierte Leitung eingeschaltet werden muss. Das bedeutet, dass sich der aktuelle Zustand der jeweiligen Komponente bzw. der im Graphen zugehörigen Kante von einen neuen, nach der Topologie-Änderung aktuell gültigen Zustand (z.B. vom Zustand "aktiv" auf den Zustand "deaktiviert" oder z.B. vom Zustand "deaktiviert" auf den Zustand "aktiv") ändert. Kanten, welche von der Topologie-Änderung nicht betroffen sind, weisen nach der Topologie-Änderung denselben Zustand auf wie davor. D.h., eine aktive Kante bleibt auch nach der Topologie-Änderung aktiv bzw. eine deaktivierte Kante bleibt auch nach der Topologie-Änderung deaktiviert - der aktuelle Zustand vor der Topologie-Änderung bleibt damit mit dem aktuell gültigen Zustand nach der Topologie-Änderung ident.

Die neuen und nach der Topologie-Änderung aktuell gültigen Zustände der Kanten (z.B. aktiv oder deaktiviert) aus dem Ermittlungsschritt 103 werden dann in einem Zuordnungsschritt 104 den Kanten im Graphen als weitere Zustandsinstanzen zugeordnet. Dabei werden die weiteren Zustandsinstanzen mit einem Zeitstempel versehen, welche den Zeitpunkt der durch die Zustandsinstanzen abgebildeten Änderung der Netztopologie angibt. Die weiteren Zustandsinstanzen können dann anhand ihres Zeitstempels zu einem neuen Ereignis bzw. Event zusammengefasst werden, welches eine zum im Zeitstempel angegebenen Zeitpunkt gültige Netztopologie des durch den Graphen dargestellten zumindest einen Teilbereichs des Niederspannungsnetzes darstellt.

Für jede weitere Topologie-Änderung des Niederspannungsnetzes, welche in der Modellierung verarbeitet werden soll, müssen der Ermittlungsschritt 103 und der Zuordnungsschritt 104 durchlaufen werden. D.h., bei mehreren Topologie-Änderungen werden den Kanten im Graphen-Modell beispielsweise neben der Initialisierungszustandsinstanz für jede Topologie-Änderung eine weitere Zustandsinstanz mit zugehörigem Zeitstempel zugeordnet, wobei der Zeitstempel immer den Zeitpunkt der jeweiligen Topologie-Änderung angibt.

Zur Vereinfachung kann im Zuordnungsschritt 104 nur jenen Kanten eine weitere Zustandsinstanz gemeinsam mit entsprechendem Zeitstempel zugeordnet werden, bei welcher die jeweilige Topologie-Änderung auch zu einer Zustandsänderung - d.h. z.B. von "aktiv" auf "deaktiviert" oder von "deaktiviert" auf "aktiv" - geführt hat. Damit erhalten nur von der jeweiligen Topologie-Änderung betroffene Kanten eine neue, weitere Zustandsinstanz mit entsprechendem Zeitstempel. Kanten, welche z.B. ihren Zustand durch Topologie-Änderungen nie verändern, weisen damit z.B. nur die Initialisierungsinstanz auf. Für das entsprechende Event werden dann beispielsweise jene Zustandsinstanzen der Kanten zusammengefasst, welche den jeweils zeitlich neuesten Zeitstempel aufweisen.

In einem Ableitungsschritt 105 wird beispielsweise von einem Netzmanagementsystem oder Netzüberwachungssystem dann auf das Graphen-Modelle zugegriffen, welche nach Ausführung des Verfahrens zur Modellierung der Netztopologie neben der statischen Netztopologie des zumindest einen Teilbereichs des Niederspannungsnetzes auch die dynamischen Netztopologie-Veränderungen umfasst. Anhand der Zeitstempel der Zustandsinstanzen, welche den im Graphen dargestellten Kanten zugeordnet sind, kann nun eine für einen vorgebbaren Zeitpunkt gültig Netztopologie abgeleitet werden. Dabei wird z.B. jenes Event bzw. es werden jene Zustandsinstanzen der Kanten ausgewählt, dessen Zeitstempel bzw. deren Zeitstempel mit dem vorgegebenen Zeitpunkt übereinstimmt oder in einer Zeitreihe am kürzesten vor dem vorgegebenen Zeitpunkt liegt bzw. liegen. D.h. es werden jene Zustandsinstanzen der Kanten ausgewählt, welche einer Zeitreihe am kürzesten in der Vergangenheit vor dem vorgegebenen Zeitpunkt liegen. Weiterhin besteht die Möglichkeit, dass im Ableitungsschritt 105 anhand der Zeitstempel der Zustandsinstanzen der Kanten bzw. anhand des Zeitstempels des zugehörigen Events eine Liste von Änderungen der Netztopologie für einen vorgebbaren Zeitraum ermittelt wird. Diese Liste umfasst dann alle Events, deren Zeitstempel vom vorgegebenen Zeitraum umfasst werden.

Figur 2 zeigt schematisch eine beispielhafte Darstellung eines Graphen einer Netztopologie eines beispielhaften Niederspannungsnetzes NV, welcher mit dem Modellierungsschritt 101 des erfindungsgemäßen Verfahrens zur Modellierung einer Netztopologie erstellt wurde. Dabei wird das Niederspannungsnetz NV über einen Energieeinspeiser ES aus einem übergeordneten Netz (z.B. Mittelspannungsnetz) versorgt. Die eingespeiste Energie wird über eine Transformatorstation TS bzw. den dort befindlichen Transformator auf das entsprechende Spannungsniveau gebracht und über eine Sammelschiene N4 und z.B. über einen Schleifenkasten N5 und Leitungsstränge K4, K5, K7 an zwei beispielhafte Verbraucher V1, V2 verteilt, welche z.B. über so genannte Trennanschlusskästen N6, N7 an das Niederspannungsnetz NV angebunden sind. An einem weiteren Leitungsstrang K10, welcher die Sammelschiene N4 mit einem weiteren Anschlusspunkt N10 verbindet, ist beispielsweise ein Energieerzeuger EE (z.B. PV-Anlage) an das Niederspannungsnetz NV angebunden.

Im Modellierungsschritt 101 wird aus dem beispielhaften Niederspannungsnetz NV mit seinen Komponenten ES, TS, V1, V2, EE, Leitungen K3, K4, K5, K6, K7, K10 und Anschlusspunkten N4, N5, N6, N7, N10 ein Graph bzw. Graphen-Modell modelliert, in welchem die Komponenten ES, TS, V1, V2, EE und Leitungen K3, K4, K5, K6, K7, K10 als Kanten K3, K4, K5, K6, K7, K10 bzw. Kanten K1, K8, K9, K11 mit zugehörigem Anfangs- oder Endknoten N1, N8, N9, N11 und die Anschlusspunkte N4, N5, N6, N7, N10 als Knoten N4, N5, N6, N7, N10 dargestellt sind.

Da der Energieeinspeiser ES beispielsweise eine Grenze des Niederspannungsnetzes bildet, wird dieser z.B. Anfangsknoten N1 mit einer zugehörigen Kante K1 dargestellt, welcher dann im weiteren Verfahren z.B. die jeweiligen Zustandsinstanzen zugeordnet werden. Der Energieeinspeiser ES ist beispielsweise über einen Anschlusspunkt N2 an die Transformatorstation TS bzw. mit dem Transformator verbunden, wobei die Transformatorstation TS bzw. der Transformator einen weiteren Anschlusspunkt N3 auf der Niederspannungsseite aufweist. Die beiden Anschlusspunkt N2, N3 der Transformatorstation TS werden daher als Knoten N2, N3 im Graphen dargestellt und der Transformator der Transformatorstation TS, welcher z.B. mittels Schaltungen unterschiedliche Zustände annehmen kann, wird als Kante K2 modelliert. Die Leitung K3, welche die Transformatorstation TS mit der Sammelschiene N4 verbindet, ist wieder als Kante K3 dargestellt.

Die Sammelschiene N4, an welcher mehrere Leitungsstränge K3, K4, K10 zusammenkommen bzw. welche für diese Leitungsstränge K3, K4, K10 den Anschlusspunkt N4 bildet, wird als Knoten N4 modelliert. Die von der Sammelschiene N4 bzw. dem Knoten N4 wegführenden Leitungen K4, K10 werden wieder als Kanten K4, K10 dargestellt. Dabei führt z.B. eine erste, von der Sammelschiene N4 bzw. vom Knoten N4 abgehende Leitung K4 bzw. Kante K4 zu einem Schleifenkasten N5, welcher wieder als Knoten N5 dargestellt ist. Eine zweite, vom Knoten N4 wegführende Leitung K10 bzw. Kante K10 führt zu einem als Knoten N10 modellierten Anschlusspunkt N10. An diesen Anschlusspunkt N10 ist beispielsweise der Energieerzeuger EE an das Netz angebunden. Da der Energieerzeuger EE z.B. einen Endpunkt für den Leitungsstrang K10 dargestellt, wird der Energieerzeuger EE als Kante K11 mit zugehörigem Endknoten N11 im Graphen modelliert. Der Kante K11 können dann in der Folge beispielsweise unterschiedliche Zustände des Energieerzeugers EE zugeordnet werden.

An den als Knoten K5 dargestellten Schleifenkasten K5 sind z.B. über zwei beispielhafte Leitungsstränge K5, K7 Anschlusspunkte bzw. so genannte Trennanschlusskästen N6, N7 für die Verbraucher V1, V2 (z.B. Haushalt, Gebäude, etc.) angebunden, wobei die Leitungsstränge K5, K7 wieder als Kanten K5, K7 und die Anschlusspunkte N6, N7 als Knoten N6, N7 dargestellt sind. Die beiden, an den Knoten N6, N7 angebundenen Verbraucher V1, V2 stellen wieder Endpunkte für die jeweiligen Leitungsstränge K5, K7 dar und werden daher als Kanten K8, K9 mit zugehörigem Endknoten N8, N9 modelliert. Weiterhin ist beispielsweise zwischen den Anschlusspunkten N6, N7 eine Leitung K6, welche als Kante K6 modelliert wird, vorgesehen. Da diese Leitung K6 z.B. nur im Störungsfall aktiviert wird bzw. üblicherweise deaktiviert ist, ist die entsprechende Kante in der Figur 2 als strichlierte Linie dargestellt.

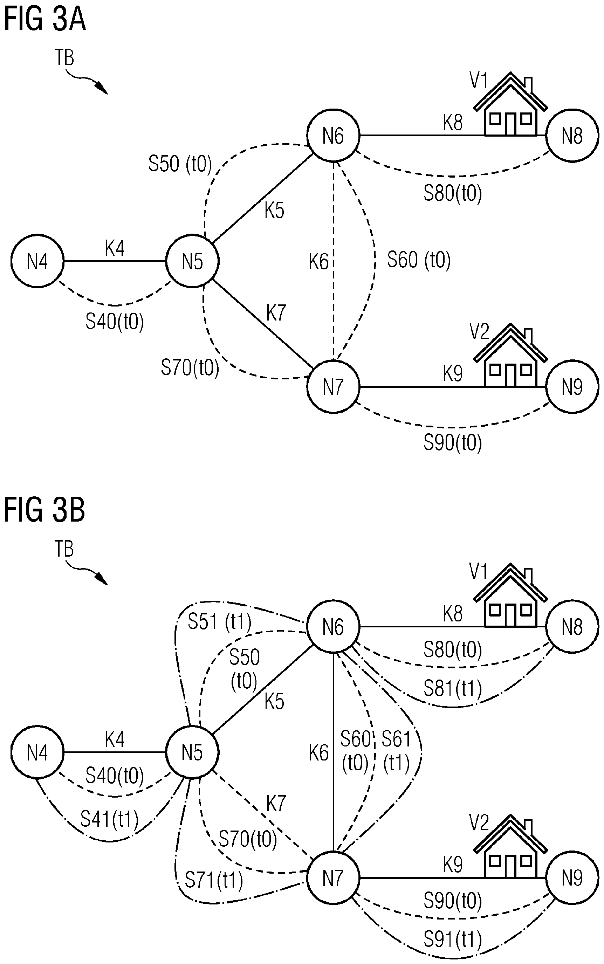

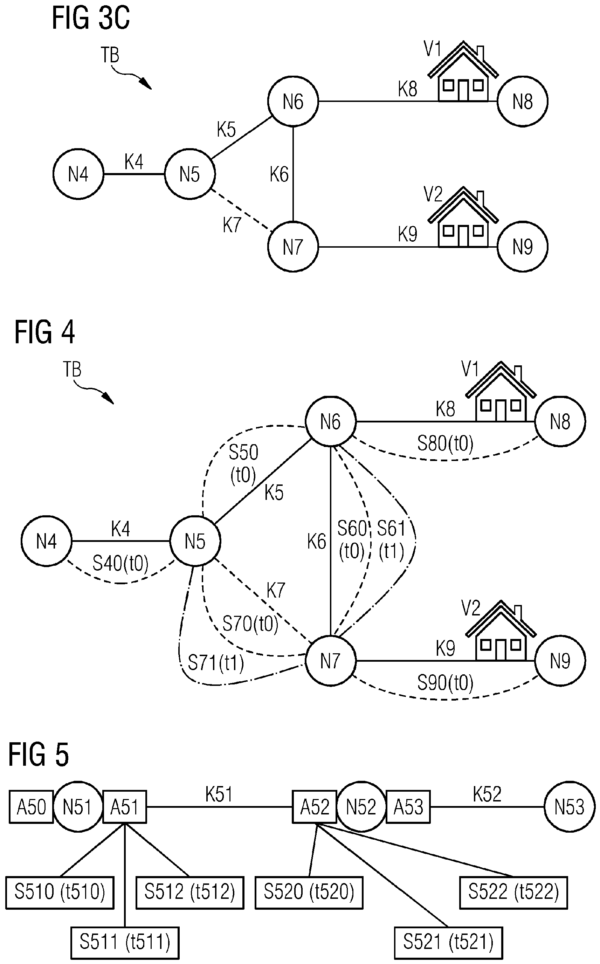

In der Folge werden die weiteren Schritte des Verfahrens zur Modellierung - d.h. der Initialisierungsschritt 102, der Ermittlungsschritt 103, der Zuordnungsschritt 104 sowie eine beispielhafte Ableitung einer aktuellen Netztopologie aus dem Graphen-Modelle mittels Ableitungsschritts 105 - anhand der Figuren 3a, 3b und 3c erläutert, wobei aus Einfachheitsgründen in den Figuren 3a bis 3c nur ein Teilbereich TB des in Figur 2 beispielhaft dargestellten Graphen des Niederspannungsnetzes betrachtet wird. Dieser Teilbereich TB umfasst die Sammelschiene bzw. den Knoten K4 mit dem ersten, abgehenden Leitungsstrang K4 bzw. der Kante K4, den Schleifenkasten bzw. den Knoten N5 mit den Leitungen bzw. Kanten K5, K7, welche zu den Anschlusspunkten bzw. Knoten N6, N7 führen, die Verbindungsleitung bzw. Kante K6 zwischen den Knoten N6, N7 sowie die beiden angeschlossenen Verbraucher V1, V2, welche als Kanten K8, K9 mit zugehörigen Endknoten N8, N9 dargestellt sind.

Figur 3a zeigt nun schematisch und beispielhaft den Graphen des Teilbereichs TB nach dem Initialisierungsschritt 102. Dazu wird im Initialisierungsschritt 102 ein zum Initialisierungszeitpunkt t0 aktueller Zustand der jeweiligen Kanten K4, K5, K6, K7 und der Verbraucher-Kanten K8, K9 ermittelt. Dabei weisen z.B. alle Kanten K4, K5, K7, K8, K9, bis auf die Kante K6, welche die Knoten N6 und N7 verbindet, beispielsweise einen aktiven Zustand auf. Die Kante K6 zwischen den Knoten N6, N7 ist z.B. deaktiviert und daher strichliert dargestellt. Der zum Initialisierungszeitpunkt t0 ermittelte Zustand wird dann den jeweiligen Kanten K4, K5, K6, K7, K8, K9 als erste Zustandsinstanz bzw. als Initialisierungsinstanz S40(t0), S50(t0), S60(t0), S70(t0), S80(t0) und S90(t0) gemeinsam mit einem Zeitstempel t0 zugeordnet. Der Zeitstempel t0 repräsentiert dabei den Initialisierungszeitpunkt t0. Weiterhin können die Initialisierungsinstanzen S40(t0), S50(t0), S60(t0), S70(t0), S80(t0) und S90(t0) aller Graph-Kanten K4, K5, K6, K7, K8, K9 zu einem ersten Ereignis oder Event - dem so genannten Initialisierungsevent - zusammengefasst werden, welches eine Netztopologie des Teilbereichs TB zum Initialisierungszeitpunkt t0 repräsentiert.

Figur 3b zeigt nun beispielhaft und schematisch ein Umsetzung des Ermittlungsschritt 103 und des Zuordnungsschritts 104 bei einer beispielhaften Änderung der Netztopologie des betrachteten Teilbereichs TB des Niederspannungsnetzes, welche z.B. zu einem Zeitpunkt t1 auftritt oder durchgeführt wird. Dabei wird zum Zeitpunkt t1 beispielweise die Leitung K7 durch einen Störfall deaktiviert und beispielsweise die Leitung K6 aktiviert, um eine weitere Energieversorgung des zweiten Verbrauchers V2 sicherzustellen. Die Leitung bzw. Kante K6, welche durch die Topologie-Änderung nun aktiv ist, ist daher als durchgezogene Linie dargestellt. Die Leitung bzw. Kante K7, welche z.B. durch einen Ausfall oder ein Abschaltung zum Zeitpunkt t1 deaktiviert wurde, ist nun strichliert dargestellt.

Die neuen und nach der Topologie-Änderung aktuell gültigen Zustände der Kanten K4, K5, K6, K7, K8, K9 (z.B. aktiv oder deaktiviert), welche im Ermittlungsschritt 103 bestimmt wurden, werden dann im Zuordnungsschritt 104 den Kanten K4, K5, K6, K7, K8, K9 im Graphen des Teilbereichs TB als weitere Zustandsinstanzen S41(t1), S51(t1), S61(t1), S71(t1), S81(t1) und S91(t1) zugeordnet. Dabei werden die weiteren Zustandsinstanzen S41(t1), S51(t1), S61(t1), S71(t1), S81(t1) und S91(t1) mit einem Zeitstempel t1 versehen, welche den Zeitpunkt t1 der Änderung der Netztopologie angibt. Die weiteren Zustandsinstanzen S41(t1), S51(t1), S61(t1), S71(t1), S81(t1) und S91(t1) können dann anhand ihres Zeitstempels t1 zu einem neuen Ereignis bzw. Event zusammengefasst werden, welches die zum im Zeitstempel t1 angegebenen Zeitpunkt t1 gültige Netztopologie des durch den Graphen dargestellten zumindest einen Teilbereich TB des Niederspannungsnetzes darstellt.

Figur 3c zeigt dann beispielhaft eine Netztopologie des beispielhaften Teilbereichs, welche aus dem Graphen-Modelle z.B. für den Zeitpunkt t1 als aktuell gültige Netztopologie im Ableitungsschritt 105 ermittelt werden kann. Dabei kann z.B. auf die Zustandsinstanzen S41(t1), S51(t1), S61(t1), S71(t1), S81(t1) und S91(t1) der Kanten mit dem Zeitstempel t1 für den Zeitpunkt t1 oder auf das entsprechende Event zugegriffen werden, um die zum Zeitpunkt t1 aktuell gültige Netztopologie des Teilbereichs TB zu ermitteln. Die aktuell gültige Netztopologie des Teilbereichs TB zeigt wieder die Sammelschiene N4 bzw. den Knoten N4 mit der angeschlossenen Leitung bzw. Kante K4, welche zum Schleifenkasten bzw. Knoten N5 führt. Weiterhin ist aus der Netztopologie des Teilbereichs TB ersichtlich, dass die vom Schleifenkasten N5 erste, abgehende Leitung K5 bzw. Kante K5 aktiv ist und den ersten Verbraucher V1 über den Anschlusspunkt N6 mit Energie versorgt. Weiterhin ist auch erkennbar, dass die zweite vom Schleifenkasten N5 abgehende Leitung K7 bzw. Kante K7 deaktiviert ist, und der zweite Verbraucher V2 nun über die erste Leitung K5, den Anschlusspunkt N6 und die Leitung K6 zwischen den Anschlusspunkten N6, N7 mit Energie versorgt wird, da die Leitung K6 bzw. Kante K6 aktiviert wurde.

Figur 4 zeigt eine beispielhafte Variante der Umsetzung des Zuordnungsschritts 104 bei der erfindungsgemäßen Modellierung des Teilbereichs TB des beispielhaft in Figur 2 dargestellten Niederspannungsnetzes NV dar, durch welche eine Anzahl an den Kanten K4, K5, K6, K7, K8, K9 zugeordneten Zustandsinstanzen reduziert werden kann. Den Kanten K4, K5, K6, K7, K8, K9 werden im Initialisierungsschritt 102 analog zu Figur 3a wieder die ersten Zustandsinstanzen bzw. Initialisierungsinstanzen S40(t0), S50(t0), S60(t0), S70(t0), S80(t0) und S90(t0) gemeinsam mit einem Zeitstempel t0 zugeordnet. Zur Vereinfachung wird im Zuordnungsschritt 104 allerding nur jenen Kanten K6, K7 eine weitere Zustandsinstanz S61(t1), S71 (t1) gemeinsam mit entsprechendem Zeitstempel t1 zugeordnet, bei welcher die Topologie-Änderung zum Zeitpunkt t1 auch zu einer Zustandsänderung - d.h. z.B. von "aktiv" auf "deaktiviert" oder von "deaktiviert" auf "aktiv" - geführt hat. Das bedeutet, der Kante K6 zwischen den Knoten N6, N7 wird damit eine weitere Zustandsinstant S61(t1) neben der Initialisierungsinstanz S60(t0) zugeordnet, da diese durch die Topologie-Änderung zum Zeitpunkt t1 z.B. aktiv geschaltet wurden. Weiterhin wird der Kante K7 zwischen den Knoten N5, N7 eine weitere Zustandsinstant S71(t1) neben der Initialisierungsinstanz S70(t0) zugeordnet, da diese durch die Topologie-Änderung zum Zeitpunkt t1 z.B. durch eine Störung ausgefallen ist oder z.B. durch eine Schaltung deaktiviert wurde. Das entsprechende die Topologie-Änderung des Teilbereichs TB darstellende Event für den Zeitpunkt t1 fasst dann beispielsweise die Kanten K6, K7 die Zustandsinstanz S61(t1), S71(t1) mit dem Zeitstempel t1 und für die restlichen Kanten K4, K5, K8, K9 die Initialisierungsinstanzen S40(t0), S50(t0), S80(t0) und S90(t0) mit dem Zeitstempel t0 zusammen, welche für die restlichen Kanten K4, K5, K8, K9 die jeweils aktuellste Zustandsinstanz darstellen.

In Figur 5 ist ein beispielhafter Teilbereich eines Niederspannungsnetzes dargestellt. Dieser Teilbereich weist z.B. drei beispielhafte Knoten N51, N52, N53 auf. Dabei kann der erste Knoten N51 z.B. eine Sammelschiene, welche über eine erste Leitung bzw. Kante K51 mit einem zweiten Knoten N52 (z.B. einem Schleifenkasten) verbunden ist. An den zweiten Knoten N52 bzw. den Schleifenkasten ist z.B. ein dritter Knoten N53, wie z.B. ein Endknoten eines Verbrauchers über eine zweite Leitung bzw. Kante K52 angebunden. Der erste und der zweite Knoten N51, N52 weisen dabei Anschlüsse oder Terminals A50, A51, A52, A53 auf. Dabei ist an einen ersten Anschluss A51 des ersten Knoten N51 ein erstes Ende der Leitung bzw. Kante K51 angebunden. Das zweite Ende der Leitung bzw. Kante K51 ist mit einen ersten Anschluss A52 des zweiten Knoten N52 angebunden. An den zweiten Anschluss A53 des zweiten Knoten N52 ist z.B. der Verbraucher - dargestellt als zweite Kante K52 und Endknoten N53 angebunden. Ein zweite Anschluss A50 des ersten Knotens N51 ist nur der Vollständigkeit eingezeichnet und kann z.B. einen Anschluss für eine Verbindung zu einer Transformatorstation darstellen.

Bei der in Figur 5 beispielhaft dargestellten Variante des Verfahrens zur Modellierung einer Netztopologie eines Niederspannungsnetzes werden anstelle von Kanten K51, K521 und deren jeweiligen Zustandsänderungen aufgrund von Topologie-Änderungen die Anschlüsse A51, A52, A53 bzw. die Terminals A51, A52, A53 und damit die entsprechenden Enden der Leitungen K51, K52 betrachtet. Dabei werden Veränderungen auf Ebene der Terminals A51, A52, A53 erfasst, indem den Terminals im Graphen-Modell für jede Veränderung eine Zustandsinstanz S510, S511, S512, S520, S521, S522 angelegt und dem jeweiligen Terminal A51, A52 zugeordnet wird. Darauf basierend kann jede Änderung des Zustands eines Anschlusses bzw. eines Terminals A51, A52, A53 über einen betrachteten Zeitraum im Graphen-Modell dargestellt und gespeichert werden. Terminals, wie z.B. der zweite Terminal A53 des zweiten Knoten N52, bei welchen über den betrachteten Zeitraum keine Zustandsänderungen auftreten, wird keine Zustandsinstanz zugeordnet.

In diesen Zustandsinstanzen S510, S511, S512, S520, S521, S522 können beispielsweise Zustände, wie z.B. "aktiv", "deaktiviert", etc. des Terminals A51, A52 sowie zumindest der Zeitpunkt t510, t511, t512, t520, t521, t522, zu welchem ein Wechsel auf den jeweiligen Zustand "aktiv", "deaktiviert", etc. eingetreten ist, als Information hinterlegt werden. Je nach Anwendungsfall können zusätzliche Informationen in diesen Zustandsinstanzen S510, S511, S512, S520, S521, S522 hinzugefügt werden, wie z.B. ein Techniker, der einen Zustandsänderung ausgeführt hat, oder eine Qualität einer Information (z.B. ob der jeweilige Zustand zu angegebenen Zeitpunkt t510, t511, t512, t520, t521, t522 bereits in einer Datenbank registriert war oder ob der Zustandswechsel z.B. vom Techniker vor Ort ausgeführt wurde.

Basierend auf der in Figur 5 beispielshaft dargestellten Variante kann ebenfalls durch eine entsprechende Abfrage zu jedem Zeitpunkt in der Vergangenheit der jeweils gültige Zustand des jeweiligen Anschlusses bzw. Terminals A51, A52, A53 und damit eine entsprechend gültige Netztopologie extrahieren werden. Es können z.B. durch eine entsprechende Abfrage alle zu einem vorgegebenen Zeitpunkt aktiven Terminals A51, A52, A53 abgefragt werden und damit auf eine zum vorgegebenen Zeitpunkt aktuelle Netztopologie geschlossen werden. Weiterhin kann bei der in Figur 5 beispielhaft dargestellten Modellierungsvariante beispielsweise auch eine Richtung des Energieflusses zwischen den Komponenten bzw. zwischen den Anschlüssen A51, A52, A53 im modellierten Niederspannungsnetz berücksichtigt werden.

## Patentansprüche

1. Computerimplementiertes Verfahren zur Modellierung einer Netztopologie zumindest eines Teilbereichs eines Niederspannungsnetzes, wobei das Niederspannungsnetz Komponenten umfasst, welche über Anschlusspunkte an den zumindest einen Teilbereich des Niederspannungsnetzes angebunden sind, und wobei durch Einschalten, Umschalten und/oder Abschalten von Komponenten, insbesondere Leitungen, und/oder Hinzufügen oder Entfernen von Komponenten, insbesondere Betriebsmittel, Verbraucher und/oder Energieerzeuger oder Energiespeichereinheiten, die Netztopologie des zumindest einen Teilbereichs des Niederspannungsnetzes verändert wird, **dadurch *gekennzeichnet, dass***
- die Netztopologie des zumindest einen Teilbereichs des Niederspannungsnetzes als Graph mit Knoten und Kanten modelliert wird (101), wobei die Komponenten als Kanten und/oder als Kanten mit zugehörigem Anfangs- oder Endknoten und die Anschlusspunkte als Knoten dargestellt werden;
- dass für jede Kante ein zu einem Initialisierungszeitpunkt geltender Zustand ermittelt und der jeweiligen als erste Zustandsinstanz zugeordnet wird (102);
- dass bei einer jeweiligen Änderung der Netztopologie für jede Kante des Graphen ein jeweils aktueller Zustand ermittelt wird, welcher ab einem Zeitpunkt der jeweiligen Änderung der Netztopologie für die jeweilige Kante des Graphen gültig ist (103); und
- dass jeder Kante des Graphen der jeweils ermittelte und ab dem Zeitpunkt der jeweiligen Änderung der Netztopologie aktuell gültige Zustand als jeweils weitere Zustandsinstanz gemeinsam mit einem Zeitstempel zugeordnet wird (104), wobei durch den Zeitstempel der Zeitpunkt der jeweiligen Änderung der Netztopologie angegeben wird.

2. Verfahren nach Anspruch 1, ***dadurch gekennzeichnet, dass*** bei einer jeweiligen Änderung der Netztopologie eine Zuordnung von jeweils weiteren Zustandsinstanzen mit zugehörigem Zeitstempel auf jenen Kanten des Graphen reduziert wird (104), deren jeweiliger aktueller Zustand durch die jeweilige Änderung der Netztopologie geändert wurde.

3. Verfahren nach einem der Ansprüche 1 bis 2, ***dadurch gekennzeichnet, dass*** die jeweilige Änderung der Netztopologie des zumindest einen Teilbereichs des Niederspannungsnetzes zu einem Ereignis oder Event zusammengefasst wird (102, 104).

4. Verfahren nach einem der vorangegangenen Ansprüche, ***dadurch gekennzeichnet, dass*** anhand der Zeitstempel der jeweiligen Zustandsinstanzen, welche den jeweiligen Kanten im Graphen zugeordnet sind, eine für einen vorgebaren Zeitpunkt gültige Netztopologie des zumindest einen Teilbereichs des Niederspannungsnetzes abgeleitet wird (105).

5. Verfahren nach einem der vorangegangenen Ansprüche, ***dadurch gekennzeichnet, dass*** anhand der Zeitstempel der jeweiligen Zustandsinstanzen, welche den jeweiligen Kanten im Graphen zugeordnet sind, eine Liste von Änderungen der Netztopologie des zumindest einen Teilbereichs des Niederspannungsnetzes für einen vorgebbaren Zeitraum ermittelt wird (105).

6. Verfahren nach einem der vorangegangenen Ansprüche, ***dadurch gekennzeichnet, dass*** einer Kante als jeweilige Zustandsinstanz ein aktiver Zustand oder ein deaktivierter Zustand zugeordnet wird (102, 104).

7. Verfahren nach einem der vorangegangenen Ansprüche, ***dadurch gekennzeichnet, dass*** bei einer Darstellung der Komponenten als Kanten und/oder als Kanten mit zugehörigem Anfangs- oder Endknoten Anschlüsse der jeweiligen Kanten an die Knoten und Zustandsänderungen der Anschlüsse der jeweiligen Kanten im Graphen betrachtet werden (102, 104).

8. Verfahren nach einem der vorangegangenen Ansprüche, ***dadurch gekennzeichnet, dass*** bei der Darstellung der Komponenten als Kanten und/oder als Kanten mit zugehörigem Anfangs- oder Endknoten im Graphen eine Richtung eines Energieflusses zwischen den Komponenten und den zugehörigen Anschlusspunkten im zumindest einen Teilbereich des Niederspannungsnetzes berücksichtigt wird (102, 104).

9. Verfahren nach einem der vorangegangenen Ansprüche, ***dadurch gekennzeichnet, dass*** der Graph des zumindest einen Teilbereichs des Niederspannungsnetzes auf Basis von Netzplanungsdaten modelliert wird (101).

10. Verfahren nach einem der vorangegangenen Ansprüche, ***dadurch gekennzeichnet, dass*** der Graph des zumindest einen Teilbereichs des Niederspannungsnetzes in einer Graph-Datenbank gespeichert und verarbeitet wird.
